# EUROPEAN PATENT APPLICATION

(11) **EP 2 613 445 A2**
(43) Date of publication of application: **10.07.2013**
(21) Application number: 11822044.1
(22) Date of filing: 25.07.2011
(51) Int. Cl.: H04B 1/38, H04M 1/02

(54) **MOBILE TERMINAL AND METHOD FOR MANUFACTURING SAME**

(30) Priority: 02.09.2010 KR 20107085812
(71) Applicant: Bluebird Soft Inc., Seoul 135-856 (KR)
(72) Inventor: LEE, Jang Won, Seoul 135-240 (KR); YOON, Chu Young, Seoul 150-106 (KR)
(74) Representative: Grünecker, Kinkeldey, Stockmair & Schwanhäusser
(86) International application number: PCT/KR2011/005479
(87) International publication number: WO 2012/030069

(57) **Abstract**

Disclosed are a mobile terminal and a method for manufacturing same. The mobile terminal of the present invention comprises: a receiver for receiving voice signals; a combination receiver LED lens and bracket having a receiver accommodation portion for accommodating the receiver; an LED lens, which is provided together with the combination receiver LED lens and bracket by means of a dual-injection molding method, so as to be integrally coupled to the combination receiver LED lens and bracket; and a front surface case having a bracket accommodation portion for accommodating the combination receiver LED lens and bracket. According to the present invention, provided are the mobile terminal and the method for manufacturing same, having a simplified manufacturing process and thereby increasing the efficiency and reduce loss during the process, the mobile terminal which is easily assembled and disassembled and thereby rendering the production and repair efficient, and which has a superior waterproof function.

## Description

### [TECHNICAL FIELD]

The present invention relates to a mobile terminal, and more particularly, to a mobile terminal that can be easily manufactured and assembled and has an assembly structure of a receiver with a superior waterproof function, and a method for manufacturing the same.

### [BACKGROUND ART]

A mobile terminal is a terminal that can be freely used while moving around without positional restrictions. A typical mobile terminal includes a mobile communication terminal such as cellular phone; a personal digital assistant (PDA) called a personal portable terminal, etc. Accordingly, the term "mobile terminal" used herein includes all of the above-described terminals. In the following description, however, for convenience of explanation, the mobile terminal refers to a PDA.

PDA is referred to as a pocket computer, collectively called a palm-sized compact device with a calculation function and an information storing and searching function for a personal or business use, and is widely used to keep information of a schedule calendar and an address book.

In particular, an industrial PDA is widely used mainly for distribution industry and a market for the industrial PDA is gradually growing. The industrial PDA is equipped with various office functions such as a barcode scanner, a credit card reader, etc., which are not provided to a general PDA. The use of the industrial PDA makes delivery, document management, and related businesses efficiently performed. For example, in an insurance company, an insurance broker can directly process various insurance related businesses such as customer information management, customer search, schedule management, meeting schedule management, anniversaries search, fund statement processing, etc., on the spot by using the industrial PDA. Next, in a hospital, medical staffs can input or search for patient's treatment records and case history, prescriptions, images such as an X-ray image, graphical materials, etc., without restrictions in time and place, by using the industrial PDA being carried. Also, for police forces' services, police forces' outside duty such as traffic control or neighborhood security is performed by using the industrial PDA so that a fine issued for a traffic offense can be instantly paid through a financial institution, which could have been paid 2-3 days after the offence was made. As a result, the police forces' outside duty time can be remarkably reduced.

As it can be seen that the industrial PDA is used in the above-described various industrial fields, the industrial PDA needs to endure any industrial environment, not a general environment for a general PDA, beyond a certain level. In other words, unlike a general PDA, it is expected that the industrial PDA may be used in a cold storage warehouse below -10 degrees or outdoors for a long time. Also, the industrial PDA may be toughly handled by a user like a postman. Accordingly, an industrial PDA equipped with an anti-shock function, a waterproof function, and anti-heat/cold function, etc. may be competitive in the product market. As such, it is essential that the industrial PDA is manufactured tougher and harder than a general PDA and further equipped with a waterproof function to endure snow or rain.

In the waterproof function of an industrial PDA, one of important parts that are structurally weak to water is an assembly structure of a receiver of a call receiving part of a mobile terminal. In an assembly structure of a receiver of a conventional mobile terminal, a combination receiver LED lens and bracket and an LED lens are separately manufactured and assembled and thus the assembly structure of the receiver is weak at a waterproof function. Also, it is not easy to manufacture and assemble the combination receiver LED lens and bracket and the LED lens.

Thus, in the manufacture of a PDA, an assembly structure of a receiver that can be easily manufactured and assembled and has a superior waterproof function is needed.

### [DETAILED DESCRIPTION OF THE INVENTION]

### [TECHNICAL PROBLEM]

The present invention provides a mobile terminal that has a simplified manufacturing process, thereby increasing efficiency and reducing loss during the process, is easily assembled and disassembled, thereby rendering production and repair efficient, and has a superior waterproof function, and a method for manufacturing the same.

### [TECHNICAL SOLUTION]

According to an aspect of the present invention, there is provided a mobile terminal including a receiver for receiving voice signals, an LED lens for transmitting light of an LED, a combination receiver LED lens and bracket for supporting both of the receiver and the LED lens, and a front surface case having a bracket accommodation portion and accommodating the combination receiver LED lens and bracket.

The LED lens and the combination receiver LED lens and bracket may be integrally formed by a dual-injection molding method.

The combination receiver LED lens and bracket may include a bracket body portion for supporting the receiver and the LED lens, a receiver accommodation portion provided in the bracket body portion and accommodating the receiver, and a decoration member accommodation portion provided in the bracket body portion and accommodating a receiver decoration member.

In the combination receiver LED lens and bracket, a lens through-hole, to which the LED lens is coupled, may be formed in the bracket body portion that is adjacent to opposite sides of the receiver accommodation portion.

The LED lens may include at least one penetration portion having a tapered rectangular column shape, a front surface display portion for displaying light of the LED on a front surface of the mobile terminal, and a connection portion for connecting the penetration portions.

In a state in which the penetration portion of the LED lens is inserted in the lens through-hole, the LED lens and the combination receiver LED lens and bracket may be integrally formed by a dual-injection molding method.

A receiver through-hole may be formed in the bracket body portion to penetrate the receiver accommodation portion and the decoration member accommodation portion.

The mobile terminal may further include a waterproof member that is provided in an area around a portion where the combination receiver LED lens and bracket is accommodated in the bracket accommodation portion.

Waterproof silicon may be provided as the waterproof member.

The mobile terminal may further include a felt that is provided between the receiver and the receiver accommodation portion when the receiver is accommodated in the receiver accommodation portion.

The felt is provided as a waterproof material.

The receiver decoration member may include a decoration member portion having a semi-cylindrical shape and having a surface in which a plurality of fine pores are formed, and a wing portion extending from both end portions of the decoration member portion in a flat panel shape and coupled to the combination receiver LED lens and bracket..

The front surface case may include a front surface through-hole that is formed by penetrating a panel in a partial area of the bracket accommodation portion.

According to another aspect of the present invention, there is provided a method for manufacturing a mobile terminal, which includes providing a front surface case having a bracket accommodation portion, coupling an LED lens for transmitting light of an LED to a combination receiver LED lens and bracket that supports both of a receiver for receiving voice signals and the LED lens, coupling the receiver to the receiver accommodation portion of the combination receiver LED lens and bracket, coupling a receiver decoration member to a decoration member accommodation portion of the combination receiver LED lens and bracket, coupling the combination receiver LED lens and bracket to the bracket accommodation portion of the front surface case, and sealing a waterproof member in an area around a portion where the combination receiver LED lens and bracket is accommodated in the bracket accommodation portion.

In the coupling of the LED lens, the LED lens and the combination receiver LED lens and bracket may be integrally formed by a dual-injection molding method.

The method may further include coupling a felt to the receiver accommodation portion after the coupling of the LED lens.

In the sealing of the waterproof member, the combination receiver LED lens and bracket and the front surface case may be coupled to each other by sealing waterproof silicon in an area around a portion where the combination receiver LED lens and bracket is accommodated in the bracket accommodation portion.

### [ADVANTAGEOUS EFFECTS]

According to the present invention, a mobile terminal has a simplified manufacturing process, thereby increasing efficiency and reducing loss during the process, is easily assembled and disassembled, thereby rendering production and repair efficient, and has a superior waterproof function. Also, a method for manufacturing the mobile terminal is provided.

### [DESCRIPTION OF THE DRAWINGS]

FIG. 1 is an exploded perspective view of an assembly structure of a receiver of a mobile terminal according to an embodiment of the present invention;

FIG. 2 is a perspective view illustrating a coupling relationship between a combination receiver LED lens and bracket and an LED lens of FIG. 1;

FIG. 3 is a perspective view viewed at a different angle from that of FIG. 2;

FIG. 4 is a perspective view illustrating an assembled state of FIG. 1;

FIG. 5 is a cross-sectional perspective view illustrating a cross section of FIG. 4;

FIG. 6 is a perspective view illustrating a state in which waterproof silicon of FIG. 4 is sealed;

FIG. 7 is a cross-sectional perspective view illustrating that a portion of the combination receiver LED lens and bracket of the mobile terminal of FIG. 1 is cut;

FIG. 8 is an enlarged cross-sectional perspective view illustrating a side surface of FIG. 7;

FIG. 9 is a perspective view by removing a front case of FIG. 7; and

FIG. 10 is a flowchart for explaining a method for manufacturing a mobile terminal according to an embodiment of the present invention.

### [BEST MODE]

The attached drawings for illustrating exemplary embodiments of the present invention are referred to in order to gain a sufficient understanding of the present invention, the merits thereof, and the objectives accomplished by the implementation of the present invention.

Hereinafter, the present invention will be described in detail by explaining exemplary embodiments of the invention with reference to the attached drawings. Like reference numerals in the drawings denote like elements.

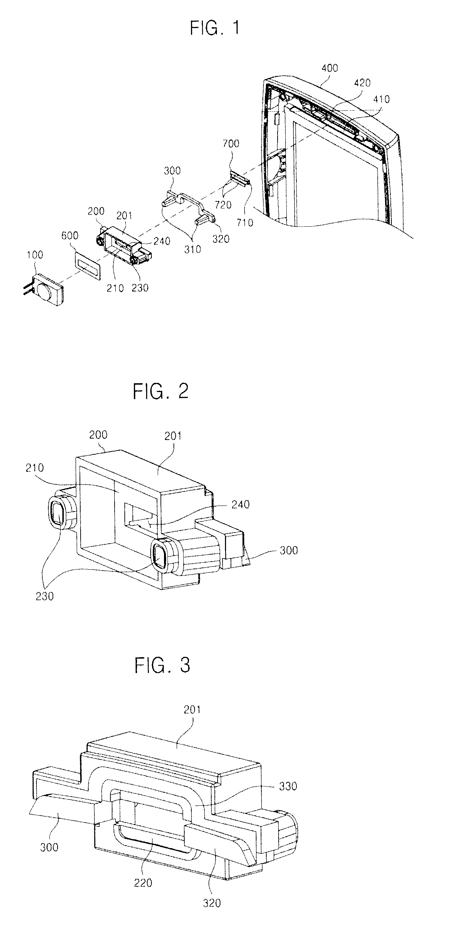

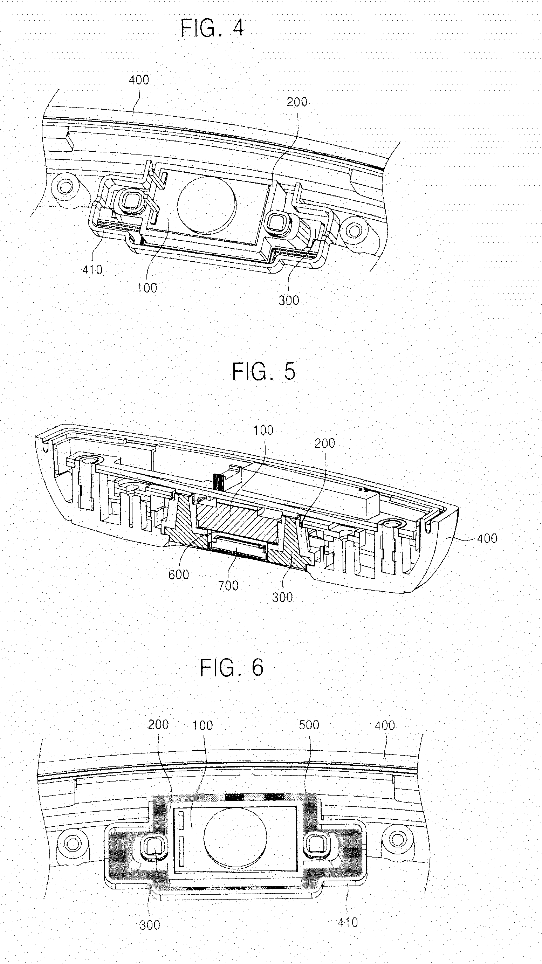

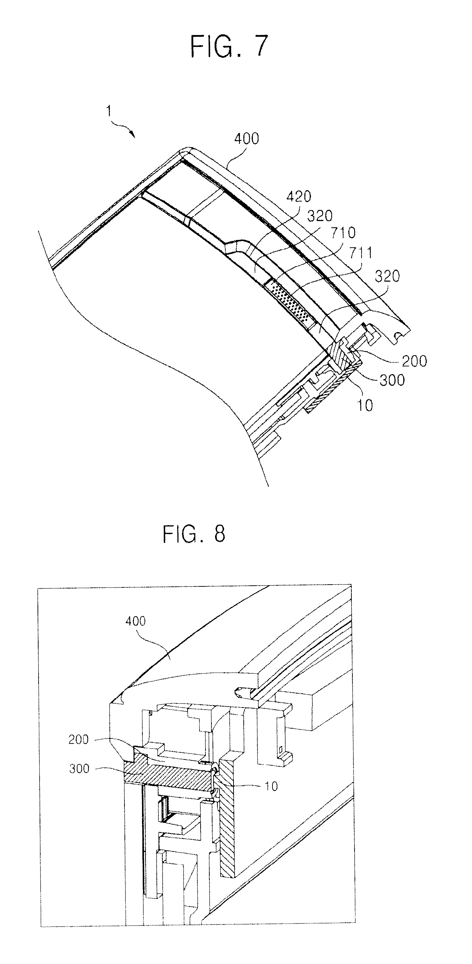

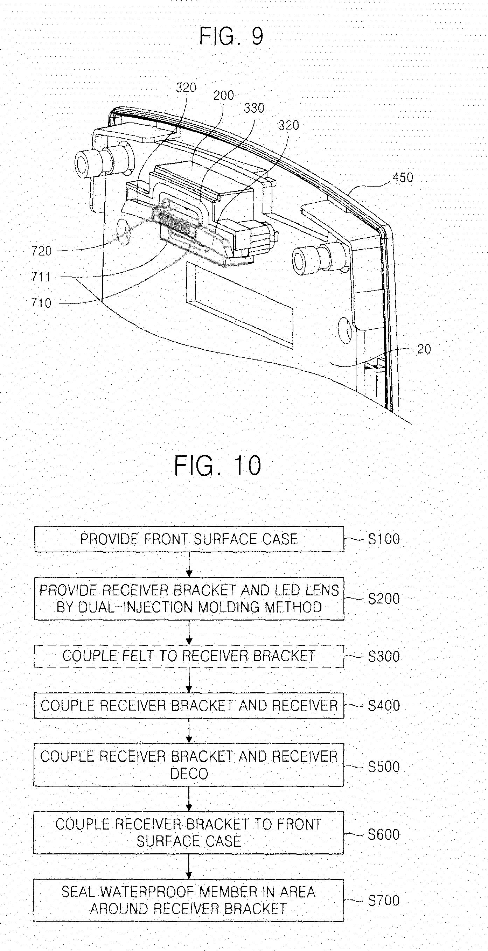

FIG. 1 is an exploded perspective view of an assembly structure of a receiver of a mobile terminal according to an embodiment of the present invention. FIG. 2 is a perspective view illustrating a coupling relationship between a combination receiver LED lens and bracket and an LED lens of FIG. 1. FIG. 3 is a perspective view viewed at a different angle from that of FIG. 2. FIG. 4 is a perspective view illustrating an assembled state of FIG. 1. FIG. 5 is a cross-sectional perspective view illustrating a cross section of FIG. 4. FIG. 6 is a perspective view illustrating a state in which waterproof silicon of FIG. 4 is sealed. FIG. 7 is a cross-sectional perspective view illustrating that a portion of the combination receiver LED lens and bracket of the mobile terminal of FIG. 1 is cut. FIG. 8 is an enlarged cross-sectional perspective view illustrating a side surface of FIG. 7. FIG. 9 is a perspective view by removing a front case of FIG. 7.

As illustrated in these drawings, a mobile terminal 1 according to an embodiment of the present invention includes a receiver 100 for receiving voice signals, a combination receiver LED lens and bracket 200 having a receiver accommodation portion 210 for accommodating the receiver 100, an LED lens, which is provided together with the combination receiver LED lens and bracket 200 by means of a dual-injection molding method, so as to be integrally coupled to the combination receiver LED lens and bracket 200, a front surface case 400 having a bracket accommodation portion 410 for accommodating the combination receiver LED lens and bracket 200, a waterproof member 500 (see FIG. 6) provided in an area around a portion where the combination receiver LED lens and bracket 200 is accommodated in the bracket accommodation portion 410, a felt 600 provided between the receiver 100 and the receiver accommodation portion 210 when the receiver 100 is accommodated in the receiver accommodation portion 210, and a receiver decoration member 700 having one end portion coupled to the combination receiver LED lens and bracket 200 and the other end portion coupled to the front surface case 400.

The receiver 100, which is a portion for receiving voice signals, receives an input of electrical signals and outputs sound signals. The receiver 100 is provided in a rectangular shape to closely contact in an effective manner the receiver accommodation portion 210 provided in the combination receiver LED lens and bracket 200. An electrical wire terminal for receiving an input of electrical signals is provided at a rear surface of the receiver 100. However, the present invention is not limited thereto and the shape of the receiver 100 may be modified as necessary.

The combination receiver LED lens and bracket 200, as illustrated in detail in FIGS. 2 and 3, include a bracket body portion 201 for supporting the receiver 100 and an LED lens 300, a receiver accommodation portion 210 provided in the bracket body portion 201 to accommodate the receiver 100, and a decoration member accommodation portion 220 provided in the bracket body portion 201 to accommodate the receiver decoration member 700.

Accordingly, the combination receiver LED lens and bracket 200 provides a structure to stably support the receiver 100 and the receiver decoration member 700, make assembly of the receiver 100 and the receiver decoration member 700 easy, and facilitate exchange or repair when the receiver 100 or the receiver decoration member 700 malfunctions or is broken. A receiver through-hole 240 is formed by penetrating a part of a panel between the receiver accommodation portion 210 and the decoration member accommodation portion 220. The receiver through-hole 240 is formed to deliver the sound signals output from the receiver 100 to a user. The felt 600 that is specially manufactured to be capable of waterproof is provided between the receiver 100 and the receiver accommodation portion 210 of the combination receiver LED lens and bracket 200 so that intrusion of moisture or foreign materials into the receiver 100 through the receiver through-hole 240 may be prevented.

In the present embodiment, the combination receiver LED lens and bracket 200 is formed to support both of the receiver 100 and the LED lens 300 so that two constituent elements may be simultaneously supported by a single bracket. Thus, the assembly structure of receiver is simplified and thus the assembly and the manufacturing of the mobile terminal are made easy. Also, compared to a structure in which many constituent elements are assembled, the structure according to the present embodiment has an effect of preventing the intrusion of external foreign materials or moisture.

A lens through-hole 230 is formed at the both side surfaces of the combination receiver LED lens and bracket 200 and thus the LED lens 300 is coupled to the lens through-hole 230. As described later, since the combination receiver LED lens and bracket 200 and the LED lens 300 are manufactured by a dual-injection molding method, the combination receiver LED lens and bracket 200 and the LED lens 300 are integrally provided through one process.

The LED lens 300 includes two penetration portions 310, each having a tapered rectangular column shape, a front surface display portion 320 displaying light of an LED 10 (see FIG. 8) on a front surface of the mobile terminal 1, and a connection portion 330 connecting the two penetration portions 310.

Each of the penetration portions 310 of the LED lens 300 is coupled to the lens through-hole 230 of the combination receiver LED lens and bracket 200 and transfers light from the LED 10 to the front surface display portion 320. In other words, the LED 10 is arranged close to an end portion of each of the penetration portions 310 of the LED lens 300. When the LED 10 emits light, the light is transferred to the front surface display portion 320 via each of the penetration portions 310 and thus a user can see the light of the LED 10 through the front surface display portion 320. The connection portion 330 connects the two penetration portions 310 so as to have the LED lens 300 formed integrally.

In the present embodiment, the LED lens 300 is manufactured with the combination receiver LED lens and bracket 200 by a dual-injection molding method. The dual-injection molding method is to mold a product by filling second resin in a space between a second cavity and a first mold product that is initially molded by using a mold designed to be capable of dual-injection molding using a core or a slide structure, or an injection molding machine having a structure of two injection apparatuses and a rotation mechanism installed on a movable plate, by using different sorts of resins.

Conventionally, a method of separately molding the combination receiver LED lens and bracket 200 and the LED lens 300 and then coupling the same has been used. However, when the combination receiver LED lens and bracket 200 and the LED lens 300 are integrally manufactured by a dual-injection molding method as in the present embodiment, the combination receiver LED lens and bracket 200 and the LED lens 300 may be integrally manufactured by one process and thus the process is simplified and a process loss is reduced. Also, the lens through-hole 230 of the combination receiver LED lens and bracket 200 is sealed, thereby providing a waterproof effect to the lens through-hole 230.

The front surface case 400 refers to a case of the mobile terminal 1 that accommodate an LCD display portion, a keypad, etc. The front surface case 400 is coupled to a rear surface case 450 with a space for accommodating parts such as a main printed circuit board (PCB) 20 interposed therebetween, thereby forming an outer appearance of the mobile terminal 1. In relation to the assembly structure of the receiver 100 of the present embodiment, the front surface case 400 is provided with the bracket accommodation portion 410 for accommodating the combination receiver LED lens and bracket 200. A front surface through-hole 420 is formed in a panel of the bracket accommodation portion 410, through which the receiver decoration member 700 and the front surface display portion 320 of the LED lens 300 penetrate, thereby protruding from the front surface. The sound signals from the receiver 100 are transferred to a user through the receiver decoration member 700 via the front surface through-hole 420. Also, a user may see light of the LED 10 from the front surface display portion 320 of the LED lens 300 via the front surface through-hole 420.

The waterproof member 500 is provided in an area around a portion where the combination receiver LED lens and bracket 200 is accommodated in the bracket accommodation portion 410 of the front surface case 400. The waterproof member 500 is provided by sealing waterproof silicon. The waterproof member 500 fixes the combination receiver LED lens and bracket 200 to the front surface case 400 and simultaneously prevents intrusion of moisture or foreign materials into the mobile terminal 1 via the front surface through-hole 420.

The receiver decoration member 700 is a path through which the sound signals are transferred directly to a user. The receiver decoration member 700 includes a decoration member portion 710 having a semi-cylindrical shape and a wing portion 720 extending from both end portions of the decoration member portion 710 in a flat panel shape and coupled to the decoration member accommodation portion 220 of the combination receiver LED lens and bracket 200.

Pluralities of fine pores 711 are formed in a surface of the decoration member portion 710 so as to transfer the sound signals from the receiver 100 The wing portion 720 is coupled to the decoration member accommodation portion 220 by using a double-sided adhesive tape attached to the wing portion 720. The wing portion 720 is coupled along an edge of the receiver through-hole 240 that is formed in the panel of the decoration member accommodation portion 220. Accordingly, the receiver decoration member 700 is provided to be larger than the receiver through-hole 240.

The mobile terminal 1 according to the present invention is easily manufactured and assembled and has a superior waterproof function.

A method for manufacturing the mobile terminal 1 according to the present invention will be described below with reference to the accompanying drawings.

FIG. 10 is a flowchart for explaining a method for manufacturing a mobile terminal according to an embodiment of the present invention.

Referring to FIG. 10, a method for manufacturing the mobile terminal 1 according to the present embodiment includes providing the front surface case 400 having the bracket accommodation portion 410 (S100), providing the combination receiver LED lens and bracket 200 having the receiver accommodation portion 210 and the decoration member accommodation portion 220, and the LED lens 300 for transmitting light of the LED 10, which are integrally formed by a dual-injection molding method (S200), coupling a felt 600 to the receiver accommodation portion 210 (S300), coupling the receiver 100 to the receiver accommodation portion 210 of the combination receiver LED lens and bracket 200 (S400), coupling the receiver decoration member 700 to the decoration member accommodation portion 220 of the combination receiver LED lens and bracket 200 (S500), coupling the combination receiver LED lens and bracket 200 to the bracket accommodation portion 410 of the front surface case 400 (S600), and sealing the waterproof member 500 in an area around a portion where the combination receiver LED lens and bracket 200 is accommodated in the bracket accommodation portion 410 (S700).

In S200 in which the combination receiver LED lens and bracket 200 and the LED lens 300 are provided by a dual-injection molding method, the combination receiver LED lens and bracket 200 and the LED lens 300 are integrally injection molded by a dual-injection molding method. Conventionally, the combination receiver LED lens and bracket 200 and the LED lens 300 are separately molded by a general injection molding method and then assembled. However, since the combination receiver LED lens and bracket 200 and the LED lens 300 are manufactured through one process by a dual-injection molding method, the process is simplified and a process loss is reduced. Also, since the combination receiver LED lens and bracket 200 and the LED lens 300 are integrally formed, intrusion of foreign materials or moisture through the lens through-hole 230 of the combination receiver LED lens and bracket 200 may be prevented.

In S300 in which the felt 600 is coupled to the receiver accommodation portion 210, the felt 600 is coupled to an edge of the receiver through-hole 240 of the receiver accommodation portion 210 by using an adhesive. A felt formed of a special material to have a superior waterproof function is used as the felt 600 so that the intrusion of foreign materials or moisture through the receiver through-hole 240 may be prevented.

In S400 in which the receiver 100 is coupled to the receiver accommodation portion 210 of the combination receiver LED lens and bracket 200, the receiver 100 is coupled to the receiver accommodation portion 210 by applying an adhesive between the felt 600 and the receiver 100.

In S500 in which the receiver decoration member 700 is coupled to the decoration member accommodation portion 220 of the combination receiver LED lens and bracket 200, the wing portion 720 of the receiver decoration member 700 is coupled to the decoration member accommodation portion 220 by applying an adhesive tape to an edge of the receiver through-hole 240 of the decoration member accommodation portion 220.

As such, the receiver 100 and the receiver decoration member 700 are simply coupled and assembled to the receiver accommodation portion 210 and the decoration member accommodation portion 220 of the combination receiver LED lens and bracket 200, the assembly thereof may be made easy and an exchange or repair work may be simply performed later.

In S600 in which the combination receiver LED lens and bracket 200 is coupled to the bracket accommodation portion 410 of the front surface case 400, and in S700 in which the waterproof member 500 is sealed in an area around a portion where the combination receiver LED lens and bracket 200 is accommodated in the bracket accommodation portion 410, the combination receiver LED lens and bracket 200 in which other components are assembled as described above is coupled to the bracket accommodation portion 410 of the front surface case 400 and then the waterproof member 500 is sealed in an area around a portion where the combination receiver LED lens and bracket 200 is accommodated, so as to fix the combination receiver LED lens and bracket 200, and thus the intrusion of foreign materials or moisture into the inside of the mobile terminal 1 through the front surface through-hole 420 is prevented.

In the present embodiment, although waterproof silicon is used as the waterproof member 500, the scope of right of the present invention is not limited thereto and a waterproof member of another material may be employed therefor.

As described above, according to the method for manufacturing the mobile terminal 1 according to the present invention, a simplified process may increase a process efficiency and reduce a process loss, assembly and disassembly are made easy so that manufacture and repair are efficiently performed, and thus the mobile terminal 1 having a superior waterproof function may be manufactured.

While this invention has been particularly shown and described with reference to exemplary embodiments thereof, it will be understood by those skilled in the art that various changes in form and details may be made therein without departing from the spirit and scope of the invention as defined by the appended claims.

### [INDUSTRIAL APPLICABILITY]

The present invention may be used for mobile terminals such as mobile communication terminals such as cellular phones, personal digital assistants (PDAs), etc.

## Claims

1. A mobile terminal comprising:
a receiver for receiving voice signals;
an LED lens for transmitting light of an LED;
a combination receiver LED lens and bracket for supporting both of the receiver and the LED lens; and
a front surface case having a bracket accommodation portion and accommodating the combination receiver LED lens and bracket.

2. The mobile terminal of claim 1, wherein the LED lens and the combination receiver LED lens and bracket are integrally formed by a dual-injection molding method.

3. The mobile terminal of claim 1, wherein the combination receiver LED lens and bracket comprises:
a bracket body portion for supporting the receiver and the LED lens;
a receiver accommodation portion provided in the bracket body portion and accommodating the receiver; and
a decoration member accommodation portion provided in the bracket body portion and accommodating a receiver decoration member.

4. The mobile terminal of claim 3, wherein, in the combination receiver LED lens and bracket, a lens through-hole, to which the LED lens is coupled, is formed in the bracket body portion that is adjacent to opposite sides of the receiver accommodation portion.

5. The mobile terminal of claim 4, wherein the LED lens comprises:
at least one penetration portion having a tapered rectangular column shape;
a front surface display portion for displaying light of the LED on a front surface of the mobile terminal; and
a connection portion for connecting the penetration portions.

6. The mobile terminal of claim 5, wherein, in a state in which the penetration portion of the LED lens is inserted in the lens through-hole, the LED lens and the combination receiver LED lens and bracket are integrally formed by a dual-injection molding method.

7. The mobile terminal of claim 3, wherein a receiver through-hole is formed in the bracket body portion to penetrate the receiver accommodation portion and the decoration member accommodation portion.

8. The mobile terminal of claim 3, further comprising a waterproof member that is provided in an area around a portion where the combination receiver LED lens and bracket is accommodated in the bracket accommodation portion.

9. The mobile terminal of claim 8, wherein waterproof silicon is provided as the waterproof member.

10. The mobile terminal of claim 3, further comprising a felt that is provided between the receiver and the receiver accommodation portion when the receiver is accommodated in the receiver accommodation portion.

11. The mobile terminal of claim 10, wherein the felt is provided as a waterproof material.

12. The mobile terminal of claim 3, wherein the receiver decoration member comprises:
a decoration member portion having a semi-cylindrical shape and having a surface in which a plurality of fine pores are formed; and
a wing portion extending from both end portions of the decoration member portion in a flat panel shape and coupled to the combination receiver LED lens and bracket..

13. The mobile terminal of claim 1, wherein the front surface case includes a front surface through-hole that is formed by penetrating a panel in a partial area of the bracket accommodation portion.

14. A method for manufacturing a mobile terminal, the method comprising:
providing a front surface case having a bracket accommodation portion;
coupling an LED lens for transmitting light of an LED to a combination receiver LED lens and bracket that supports both of a receiver for receiving voice signals and the LED lens;
coupling the receiver to the receiver accommodation portion of the combination receiver LED lens and bracket;
coupling a receiver decoration member to a decoration member accommodation portion of the combination receiver LED lens and bracket;
coupling the combination receiver LED lens and bracket to the bracket accommodation portion of the front surface case; and
sealing a waterproof member in an area around a portion where the combination receiver LED lens and bracket is accommodated in the bracket accommodation portion.

15. The method of claim 14, wherein, in the coupling of the LED lens, the LED lens and the combination receiver LED lens and bracket are integrally formed by a dual-injection molding method.

16. The method of claim 14, further comprising coupling a felt to the receiver accommodation portion after the coupling of the LED lens.

17. The method of claim 14, wherein, in the sealing of the waterproof member, the combination receiver LED lens and bracket and the front surface case are coupled to each other by sealing waterproof silicon in an area around a portion where the combination receiver LED lens and bracket is accommodated in the bracket accommodation portion.
